# FASCICULE DE BREVET EUROPEEN

(11) **EP 4 107 368 B1**
(45) Date de publication et mention de la délivrance du brevet: **06.11.2024**
(21) Numéro de dépôt: 21715946.6
(22) Date de dépôt: 09.03.2021
(51) Int. Cl.: F01D 5/18

(54) **AUBE DE TURBINE COMPORTANT DES NERVURES ENTRE DES SORTIES DE REFROIDISSEMENT AVEC DES ORIFICES DE REFROIDISSEMENT**
TURBINENSCHAUFEL MIT RIPPEN ZWISCHEN KÜHLAUSGÄNGEN MIT KÜHLLÖCHERN
TURBINE BLADE COMPRISING RIBS BETWEEN COOLING OUTLETS WITH COOLING HOLES

(30) Priorité: 18.03.2020 FR 2002647
(43) Date de publication de la demande: 28.12.2022
(73) Titulaire: SAFRAN AIRCRAFT ENGINES, 75015 Paris (FR)
(72) Inventeur: OSTINO, Léandre, 77550 MOISSY-CRAMAYEL (FR); BOTREL, Erwan, Daniel, 77550 MOISSY-CRAMAYEL (FR)
(74) Mandataire: Brevalex
(86) Numéro de dépôt international: PCT/FR2021/050393
(87) Numéro de publication internationale: WO 2021/186122

(56) Documents cités:
- EP-A1- 1 213 442
- EP-A2- 1 035 302
- WO-A1-2013/169471
- US-A1- 2003 133 795
- US-A1- 2010 074 762

## Description

### DOMAINE TECHNIQUE

La présente invention se rapporte au domaine général du refroidissement des aubes de turbine de turbomachine, et plus particulièrement au domaine du refroidissement des aubes mobiles de turbine pour turbomachine.

L'invention s'applique à tout type de turbomachines aéronautiques ou terrestres. Elle peut notamment être appliquée aux aubes mobiles de turbine de turbomachines d'aéronef telles que les turboréacteurs et les turbopropulseurs, par exemple à double flux. Elle peut encore être appliquée aux aubes mobiles de turbine à gaz industrielle. L'invention concerne en outre le refroidissement d'aubes mobiles de turbine haute pression ou basse pression.

### ÉTAT DE LA TECHNIQUE ANTÉRIEURE

Afin de concevoir des moteurs de plus en plus performants et à consommation réduite, il a été développé des aubes de turbine de taille de plus en plus réduite et résistantes à des contraintes thermiques et mécaniques de plus en plus importantes telles que la température, la pression, la vitesse de rotation, entre autres.

Il est en effet connu que les aubes d'une turbine à gaz de turbomachine, et notamment de la turbine haute-pression, sont soumises aux températures élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Il est également connu qu'une élévation de la température des gaz de la turbine haute-pression permet d'améliorer le rendement d'une turbomachine, donc le rapport entre la poussée du moteur et le poids d'un avion propulsé par cette turbomachine. Par conséquent, des efforts ont été entrepris afin de réaliser des aubes de turbine qui peuvent résister à des températures de plus en plus élevées. De plus, l'amélioration des aubes de turbine permet de diminuer la consommation en carburant du moteur.

Une des solutions existantes aujourd'hui pour améliorer les aubes, et notamment améliorer la tenue mécanique des aubes, est de diminuer leur température de fonctionnement en rendant plus efficient le refroidissement. Ce refroidissement est notamment obtenu par le biais de circuits de refroidissement prévus dans les aubes visant à réduire la température de ces dernières. Grâce à de tels circuits, de l'air de refroidissement, qui est généralement introduit dans l'aube par son pied, traverse celle- ci en suivant un trajet formé par des cavités pratiquées dans l'aube avant d'être éjecté par des orifices (ou perçages) s'ouvrant à la surface de l'aube, et en particulier au niveau du bord de fuite de l'aube. L'amélioration du circuit de refroidissement d'une aube permet de diminuer le débit d'air nécessaire à son refroidissement et permet également d'augmenter la durée de vie des aubes et/ou d'assurer la tenue d'un objectif de durée de vie dans un contexte d'augmentation de la température en entrée de l'étage de turbine.

Par ailleurs, l'amélioration des aubes est également rendue possible par l'amélioration du profil aérodynamique afin d'augmenter le rendement de l'aube.

Des solutions ont déjà été décrites dans l'art antérieur visant à améliorer le refroidissement et le profil aérodynamique au niveau du bord de fuite d'une aube mobile de turbine haute pression. A titres d'exemples, la demande de brevet français FR 3 041989 A1 divulgue le refroidissement du bord de fuite d'une aube de turbine haute pression par le biais de trois régions de refroidissement distinctes. La demande de brevet français FR 2 864 990 A1 décrit des solutions de perfectionnement apporté aux fentes d'évacuation de l'air de refroidissement au niveau du bord de fuite d'une aube de turbine haute pression. WO 2013/169471 A1 divulgue une fente de refroidissement de bord de fuite d'aube de turbine avec les caractéristiques techniques du préambule de la revendication 1.

Cependant, il subsiste un besoin pour améliorer encore l'efficacité de refroidissement au niveau du bord de fuite d'une aube de turbine, afin notamment d'en garantir la tenue mécanique et maximiser le rendement aérodynamique. En particulier, dans le cadre du refroidissement du bord de fuite par le biais de fentes de refroidissement, les nervures entre fentes sont difficilement soumises à l'influence des films de refroidissement situés en amont et un gradient de températures trop important existe le long des nervures.

### EXPOSÉ DE L'INVENTION

L'invention a donc pour but de remédier au moins partiellement aux besoins mentionnés ci-dessus et aux inconvénients relatifs aux réalisations de l'art antérieur.

L'invention a ainsi pour objet, selon l'un de ses aspects, une aube de turbine de turbomachine, destinée à être montée autour d'un axe de rotation, comportant une plateforme, notamment une plateforme intérieure, et une pale s'étendant dans une direction radiale par rapport à l'axe de rotation, en allant radialement de l'intérieur vers l'extérieur en éloignement de la plateforme et en se terminant par un sommet, la pale comprenant un bord d'attaque et un bord de fuite, situé en aval du bord d'attaque, et la pale comprenant une paroi d'intrados et une paroi d'extrados reliant chacune le bord d'attaque au bord de fuite, la paroi d'intrados et la paroi d'extrados étant reliées entre elles au niveau du bord de fuite par un congé de raccordement de bord de fuite,
l'aube comportant une cavité de refroidissement alimentant en flux de refroidissement une pluralité de sorties de refroidissement, notamment des fentes de refroidissement, s'étendant notamment en majorité sensiblement axialement, débouchant sur le bord de fuite, les sorties de refroidissement étant ménagées le long du bord de fuite, sur l'une des parois d'intrados et d'extrados, entre la plateforme et le sommet, deux sorties de refroidissement adjacentes étant délimitées par une nervure, s'étendant notamment principalement axialement, entre une extrémité amont, située radialement entre les deux sorties de refroidissement adjacentes, notamment sensiblement alignée radialement avec l'extrémité amont d'une sortie de refroidissement adjacente, et une extrémité aval, qui débouche sur le bord de fuite, notamment sensiblement alignée radialement avec l'extrémité aval de ladite sortie de refroidissement adjacente,
caractérisée en ce qu'au moins un orifice de refroidissement est formé dans l'épaisseur d'au moins une nervure, entre l'extrémité amont et l'extrémité aval, et/ou en ce qu'au moins un orifice de refroidissement, présentant une portion cylindrique, est formé Z dans l'épaisseur d'une portion du congé de raccordement de bord de fuite dans le prolongement axial d'au moins une nervure, en aval de l'extrémité aval, de sorte à assurer une communication fluidique pour un flux de refroidissement entre l'intérieur et l'extérieur de l'aube pour le refroidissement de ladite au moins une nervure.

Grâce à l'invention, il est possible de diminuer la consommation en carburant de la turbomachine en diminuant le débit nécessaire au refroidissement des aubes, notamment des aubes mobiles de turbine haute pression, avec la même durée de vie qu'une aube de turbine intégrant un circuit de refroidissement classique. De plus, il est possible d'augmenter la durée de vie des aubes, notamment des aubes de turbine haute pression, par rapport à des aubes intégrant une solution classique de refroidissement du bord de fuite, par exemple des fentes en bord de fuite.

L'aube de turbine selon l'invention peut en outre comporter l'une ou plusieurs des caractéristiques suivantes prises isolément ou suivant toutes combinaisons techniques possibles.

Ledit au moins un orifice de refroidissement peut comporter un orifice de refroidissement, notamment un perçage, de préférence ayant une forme circulaire et/ou oblongue en section, formé dans l'épaisseur d'une portion du congé de raccordement de bord de fuite, l'axe dudit orifice de refroidissement étant notamment agencé dans le prolongement d'un axe médian de ladite au moins une nervure, notamment encore sensiblement aligné avec un axe médian de ladite au moins une nervure, l'axe médian s'étendant le long de la nervure.

En particulier, ledit orifice de refroidissement présente une portion cylindrique. Ladite portion cylindrique peut présenter une dimension radiale en section, notamment un diamètre, préférentiellement sensiblement constante au travers de la paroi de la portion du congé de raccordement de bord de fuite depuis l'intérieur de l'aube jusqu'à l'extérieur de l'aube, notamment comprise entre 0,10 mm et 0,50 mm.

Ledit au moins un orifice de refroidissement peut comporter une gorge qui débouche sur le bord de fuite et qui s'évase dans le prolongement de la portion cylindrique dudit au moins un l'orifice de refroidissement.

En particulier, ledit orifice de refroidissement peut présenter une portion cylindrique qui présente une dimension radiale en section, notamment un diamètre, préférentiellement sensiblement constante, notamment comprise entre 0,10 mm et 0,50 mm, au travers de la paroi de la portion du congé de raccordement de bord de fuite depuis l'intérieur de l'aube jusqu'à l'entrée d'une gorge formée à l'intérieur de la paroi de la portion du congé de raccordement de bord de fuite et débouchant à sa sortie sur l'extérieur de l'aube. Ladite gorge peut présenter une dimension axiale non nulle et une dimension radiale supérieure à la dimension radiale dudit orifice de refroidissement en amont de la gorge, notamment une dimension radiale variable.

Par ailleurs, le rapport entre la dimension radiale dudit au moins un orifice de refroidissement en amont de la gorge et le diamètre du congé de raccordement de bord de fuite peut être strictement compris dans la plage 0,25 et 0,85.

En outre, ledit au moins un orifice de refroidissement peut comporter un orifice de refroidissement formé dans l'épaisseur d'au moins une nervure, comporte un perçage, notamment de forme cylindrique et/ou avec une première partie de forme cylindrique et une deuxième partie de forme évasée comprenant des parois divergentes.

Ledit au moins un orifice de refroidissement peut être de forme cylindrique avec un rapport du diamètre en section sur la dimension radiale de la nervure strictement compris entre 0,20 et 0,85. De plus, le rapport de la distance axiale dudit au moins un orifice de refroidissement par rapport à l'extrémité aval de la nervure sur la distance axiale de la nervure entre ses extrémités amont et aval peut être strictement compris entre 0,1 et 0,9.

Par ailleurs, au moins un orifice de refroidissement peut être formé dans l'épaisseur de chaque nervure, entre l'extrémité amont et l'extrémité aval, et au moins un autre orifice de refroidissement peut être formé dans l'épaisseur d'une portion du congé de raccordement de bord de fuite située dans le prolongement axial, notamment sensiblement alignée axialement, de chaque nervure, en aval de l'extrémité aval, de sorte à assurer une communication fluidique pour un flux de refroidissement entre l'intérieur et l'extérieur de l'aube pour le refroidissement de chaque nervure.

De plus, ledit au moins un orifice de refroidissement peut comporter une pluralité d'orifices de refroidissement, chacun étant formé dans l'épaisseur d'une nervure, entre l'extrémité amont et l'extrémité aval, et/ou dans l'épaisseur d'une portion du congé de raccordement de bord de fuite situé dans le prolongement axial, notamment sensiblement aligné axialement, d'une nervure, et le pas radial des orifices de refroidissement, correspondant à la dimension radiale entre deux orifices adjacents et mesuré du centre de la section de sortie d'un orifice au centre de la section de sortie de l'orifice adjacent, peut être compris entre deux et quatre fois la dimension radiale d'un orifice de refroidissement, notamment son diamètre.

Par ailleurs, le pas radial des nervures, correspondant à la dimension radiale entre deux nervures radialement adjacentes et mesuré du centre d'une nervure au centre de la nervure adjacente, peut être compris entre deux et huit fois la dimension radiale d'une nervure, soit la largeur d'une nervure.

Ledit au moins un orifice de refroidissement peut en outre comporter une pluralité d'orifices de refroidissement, chacun étant formé dans l'épaisseur d'une nervure, entre l'extrémité amont et l'extrémité aval, et/ou dans l'épaisseur d'une portion du congé de raccordement de bord de fuite située dans le prolongement axial, notamment sensiblement alignée axialement, d'une nervure, et la hauteur radiale de la zone comprenant les orifices de refroidissement peut être comprise entre 10 et 40 % de la hauteur radiale de la pale, correspondant à la dimension radiale de la pale entre la plateforme et le sommet. La zone comprenant les orifices de refroidissement peut être continue ou discontinue. Dans ce dernier cas, la hauteur radiale de cette zone peut correspondre à la somme des hauteurs radiales d'au moins deux portions locales comprenant des orifices de refroidissement.

Préférentiellement, l'aube peut être une aube mobile pour une roue mobile de turbine pour turbomachine, notamment de turbine haute pression.

Par ailleurs, l'invention a encore pour objet, selon un autre de ses aspects, une turbine pour turbomachine, caractérisée en ce qu'elle comporte au moins une roue mobile comprenant une pluralité d'aubes mobiles telles que celle définie précédemment, la turbine étant préférentiellement une turbine haute pression.

De plus, l'invention a aussi pour objet, selon un autre de ses aspects, une turbine pour turbomachine, caractérisée en ce qu'elle comporte au moins un distributeur comprenant une pluralité d'aubes fixes telles que celle définie précédemment, la turbine étant préférentiellement une turbine haute pression.

En outre, l'invention a également pour objet, selon un autre de ses aspects, une turbomachine, caractérisée en ce qu'elle comporte au moins une turbine telle que définie précédemment, la turbomachine étant préférentiellement une turbomachine à double corps.

L'aube, la turbine et la turbomachine selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
La figure 1 est une vue schématique en coupe axiale d'un exemple de turboréacteur à double flux convenant à la mise en oeuvre de l'invention,
La figure 2 représente, selon une vue en perspective, un exemple d'aube mobile de turbine d'un turboréacteur tel que celui de la figure 1,
Les figures 3A et 3B représentent, selon des vues agrandies partielles de côté, deux exemples de réalisation d'aubes de turbine conformes à l'invention,
La figure 4 illustre, schématiquement selon une vue en coupe selon B-B de la figure 3B, la configuration géométrique d'un orifice de refroidissement de la turbine de la figure 3B et
Les figures 5A, 5B, 6A et 6B représentent, selon des vues agrandies partielles de côté, d'autres exemples de réalisation d'aubes de turbine conformes à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

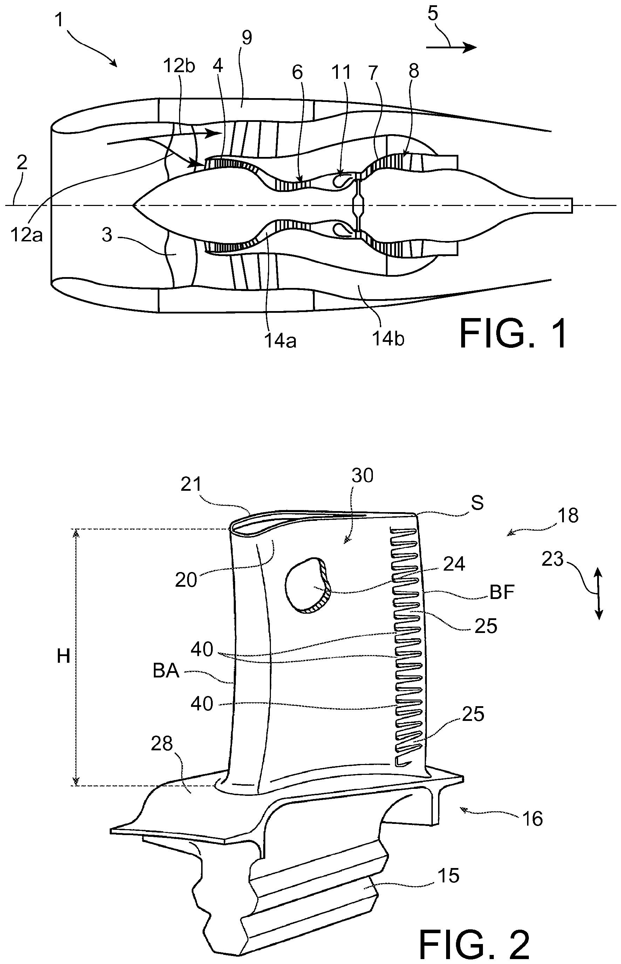

Dans toute la description, il est noté que l'on appelle axe 2 de la turbomachine 1, l'axe de symétrie radiale de celle-ci (voir figure 1). La direction axiale de la turbomachine 1 correspond à l'axe de rotation 2 de la turbomachine 1. Une direction radiale de la turbomachine 1 est une direction perpendiculaire à l'axe 2 de la turbomachine 1. En outre, sauf précision contraire, les adjectifs et adverbes axial, radial, axialement et radialement sont utilisés en référence aux directions axiale et radiale précitées, et les termes intérieur (ou interne) et extérieur (ou externe) sont utilisés en référence à une direction radiale de sorte que la partie intérieure d'un élément est plus proche de l'axe 2 de la turbomachine 1 que la partie extérieure du même élément. De plus, il est noté que les termes amont et aval sont à considérer par rapport à une direction principale 5 d'écoulement normal des gaz (de l'amont vers l'aval) pour la turbomachine 1.

La figure 1 représente une turbomachine 1 d'aéronef, par exemple ici un turboréacteur à double flux et à double corps, laquelle présente un axe central longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

De façon classique, la turbine haute pression 7 présente une alternance de roues mobiles et de distributeurs. Un distributeur comporte une pluralité d'aubes fixes, et une roue mobile comporte une pluralité d'aubes mobiles 18, comme visible sur la figure 2.

Les aubes mobiles 18 de turbine haute pression 7 peuvent être principalement refroidies, au niveau du bord de fuite, par le biais de perçages réalisés dans l'épaisseur du congé de raccordement de bord de fuite ou bien encore par le biais de fentes de refroidissement.

Ces deux technologies de refroidissement présentent des avantages et des inconvénients. Ainsi, les perçages réalisés dans l'épaisseur du congé de raccordement de bord de fuite présentent un bon compromis d'un point de vue thermomécanique. Ils permettent d'assurer un niveau thermique maîtrisé au niveau du bord de fuite. Cependant, cela nécessite de définir un bord de fuite du profil aérodynamique relativement épais compte-tenu des épaisseurs minimales de matière dans cette zone, ce qui a alors un effet défavorable sur le rendement aérodynamique du profil. En outre, les fentes en bord de fuite permettent de définir un dièdre aérodynamique relativement fin. D'un point de vue thermique, elles sont cependant moins efficaces que des perçages débouchant dans l'épaisseur du congé de raccordement de bord de fuite. En effet, l'air émis en entrée des fentes de bord de fuite pour refroidir par film le fond de fente se réchauffe au contact de l'air de la veine principale au cours du parcours du fond de fente.

A titre d'exemple, la figure 2 représente en perspective une aube mobile 18 de turbine, par exemple de turbine haute pression 7 comme décrit précédemment en référence à la figure 1. L'aube 18 est fixée sur un rotor de turbine (non représenté) par l'intermédiaire d'un emmanchement 15 généralement en forme de sapin.

L'aube 18 se présente sous la forme d'une surface aérodynamique formée par une pale 30 qui s'étend radialement, selon la direction radiale 23, entre un pied d'aube 16 et un sommet d'aube S et axialement entre un bord d'attaque BA et un bord de fuite BF. La surface aérodynamique de l'aube 18 définit ainsi une paroi d'intrados 20 et une paroi d'extrados 21.

L'emmanchement 15 de l'aube 18 se raccorde au pied d'aube 16 au niveau d'une plateforme intérieure 28 définissant une paroi pour la veine d'écoulement des gaz de combustion au travers de la turbine.

L'aube 18 qui est soumise aux températures élevées des gaz de combustion traversant la turbine nécessite d'être refroidie. A cet effet, et de façon connue en soi, l'aube 18 comporte un ou plusieurs circuits internes de refroidissement. Chaque circuit de refroidissement se compose d'au moins une cavité 24 s'étendant radialement entre le pied 16 et le sommet S d'aube. La cavité est alimentée en air de refroidissement à l'une de ses extrémités radiales par une ouverture d'admission d'air (non représentée). Cette ouverture d'admission d'air est généralement prévue au niveau de l'emmanchement 15 de l'aube 18. Afin d'évacuer l'air de refroidissement s'écoulant dans la cavité 24 des circuits de refroidissement, une pluralité de fentes 25 sont réparties le long du bord de fuite BF, entre le pied 16 et le sommet S d'aube. Ces fentes d'évacuation 25 s'ouvrent dans la cavité 24 et débouchent à la paroi d'intrados 20 de l'aube 18, au niveau de son bord de fuite BF.

Afin d'améliorer le refroidissement en bord de fuite et obtenir un profil aérodynamique amélioré de l'aube mobile 18, l'invention se propose de définir une configuration évolutive d'éjection de l'air de refroidissement au niveau du bord de fuite associée à un dièdre en bord de fuite du profil aérodynamique aussi évolutif selon la hauteur radiale, en fonction des besoins thermomécaniques locaux et de maximiser le rendement aérodynamique.

En particulier, dans le cadre du refroidissement du bord de fuite BF par le biais de fentes de refroidissement 25, les nervures 40 entre fentes sont difficilement soumises à l'influence des films de refroidissement situés en amont et un gradient de températures important existe le long des nervures 40.

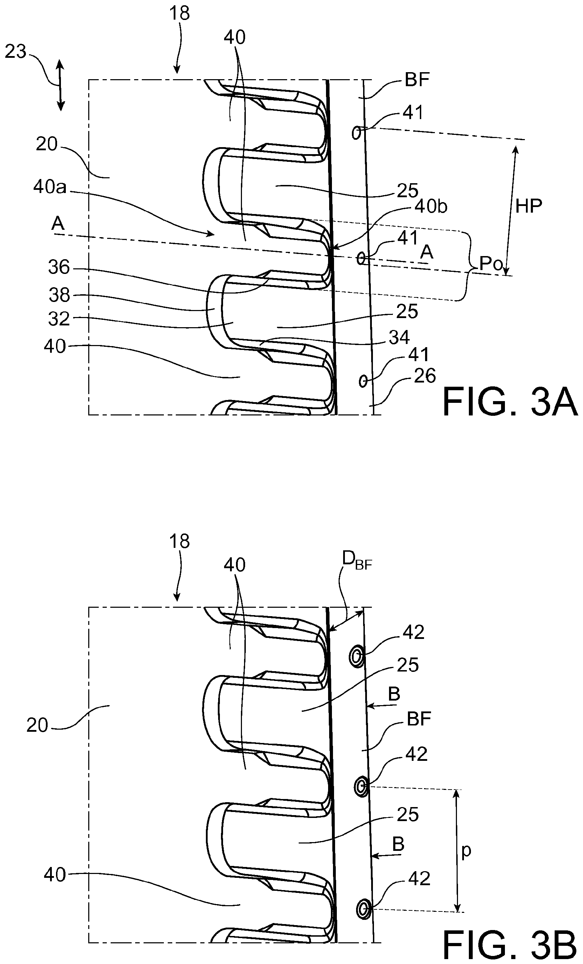

La figure 3A représente ainsi, selon une vue agrandie partielle en perspective d'une aube 18 telle que celle représentée à la figure 2, un premier exemple de réalisation conforme à l'invention. Il est à noter que les caractéristiques décrites en lien avec l'exemple de la figure 3A et applicables également aux réalisations des figures 3B à 6B ne sont pas nécessairement décrites de nouveau pour ces figures 3B à 6B.

Sur la figure 3A, la géométrie des fentes de refroidissement 25 est plus précisément représentée. Chaque fente de refroidissement 25 comporte une paroi en renfoncement (ou en retrait) 32, un rebord (ou marche) radialement interne 34, un rebord (ou marche) radialement externe 36 et une paroi latérale 38 munie d'une ouverture (non représentée) s'ouvrant dans la cavité 24 du circuit de refroidissement.

Par rebord radialement interne, on entend le rebord qui est disposé du côté du pied d'aube 16. De même, par rebord radialement externe, on entend le rebord qui est situé du côté du sommet d'aube S. Les notions « radialement interne » et « radialement externe » s'entendent par rapport à la direction radiale selon laquelle s'étend l'aube. La paroi en renfoncement 32 s'étend radialement entre le rebord radialement interne 34 et le rebord radialement externe 36 et axialement entre la paroi latérale 38 et le bord de fuite BF de l'aube. En outre, les rebords radialement interne 34 et radialement externe 36 s'étendent entre la paroi en renfoncement 32 et la surface aérodynamique de la pale 30.

Cette géométrie particulière des fentes de refroidissement 25 assure ainsi un guidage de l'air issu de la cavité 24 du circuit de refroidissement et permet de refroidir le bord de fuite BF de l'aube qui est la partie de l'aube la moins épaisse et donc la plus exposée aux températures élevées des gaz de combustion.

Les fentes de refroidissement 25 s'étendent sensiblement axialement sur la paroi d'intrados 20 et débouchent sur le bord de fuite BF. Entre deux fentes 25 radialement adjacentes est située une nervure 40 s'étendant sensiblement axialement entre une extrémité amont 40a, sensiblement alignée radialement avec l'extrémité amont d'une fente de refroidissement 25 radialement adjacente, et une extrémité aval 40b, sensiblement alignée radialement avec l'extrémité aval de cette fente de refroidissement 25 radialement adjacente. L'aube 18 comporte ainsi une pluralité de nervures 40 entre les fentes de refroidissement 25.

Conformément à l'invention, au moins un orifice de refroidissement 41, 42, 43, 44 est formé dans l'épaisseur d'au moins une nervure 40, entre l'extrémité amont 40a et l'extrémité aval 40b, et/ou dans l'épaisseur d'une portion Po du congé de raccordement de bord de fuite 26 sensiblement alignée axialement avec au moins une nervure 40, en aval de l'extrémité aval 40b, de sorte à assurer une communication fluidique pour un flux de refroidissement entre l'intérieur et l'extérieur de l'aube 18 pour le refroidissement de ladite au moins une nervure 40.

Précisément, dans l'exemple de réalisation de la figure 3A, des orifices de refroidissement 41 sont formés dans l'épaisseur des portions Po du congé de raccordement de bord de fuite 26 sensiblement alignées chacune axialement avec les nervures 40.

Ces orifices de refroidissement 41 prennent la forme de perçages, ici de forme circulaire en section mais pouvant aussi être oblongue, réalisés dans l'épaisseur du congé de raccordement de bord de fuite 26, entre deux fentes 25 radialement adjacentes pour assurer un refroidissement conséquent de zones soumises à des chargements thermiques importants. La configuration des orifices 41 peut être fonction de la situation thermique de la pale 30 et peut être associée à un épaississement local du bord de fuite BF du profil aérodynamique pour réaliser les perçages.

En comparaison avec une aube refroidie uniquement par des fentes 25, la solution de l'invention avec présence des orifices 41 permet de refroidir plus efficacement par effet de pompage les nervures 40 en bord de fuite BF. Une augmentation locale de la valeur du rayon du congé de raccordement de bord de fuite 26 peut être réalisée, par exemple de 20 à 100 % par rapport au profil d'une aube refroidie uniquement par des fentes de refroidissement en bord de fuite, en fonction de la dimension radiale, notamment du diamètre, retenue pour les perçages 41.

Comme visible sur la figure 3A, les orifices 41 présentent un axe de perçage sensiblement aligné avec l'axe médian AA des nervures 40. Toutefois, cet axe de perçage peut être décalé au besoin pour répondre notamment à des impératifs de fabrication.

De plus, les orifices 41 peuvent être situés sur tout ou partie de la hauteur radiale H de l'aube 18 ou uniquement au niveau des nervures 40 nécessitant un refroidissement supplémentaire. En particulier, en fonction du besoin thermomécanique local, la hauteur radiale HP de la zone comprenant les orifices de refroidissement 41 est comprise entre 10 et 40 % de la hauteur radiale H de la pale 30, correspondant à la dimension radiale de la pale 30 entre la plateforme intérieure 28 et le sommet S, visible sur la figure 2. Il est à noter que la présence de tels orifices 41 sur un pourcentage important de la hauteur radiale H, par exemple entre 30 et 40 %, est favorable pour la tenue thermomécanique, donc la durée de vie de l'aube 18, mais défavorable pour sa performance aérodynamique.

Dans l'exemple de la figure 3A, les orifices de refroidissement 41 présentent un diamètre d constant au travers de la paroi des portions Po du congé de raccordement de bord de fuite 26 depuis l'intérieur de l'aube 18 jusqu'à l'extérieur de l'aube 18, notamment comprise entre 0,10 mm et 0,50 mm.

Dans l'exemple de la figure 3B, les orifices de refroidissement 42 présentent un diamètre d constant, notamment comprise entre 0,10 mm et 0,50 mm, au travers de la paroi des portions Po du congé de raccordement de bord de fuite 26 depuis l'intérieur de l'aube 18 jusqu'à l'entrée de gorge 42g.

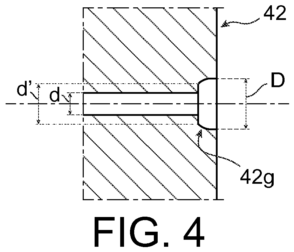

Ces gorges 42g sont visibles sur la figure 3B en perspective et sur la figure 4 en coupe, selon B-B de la figure 3B. Chaque gorge 42g est formée à l'intérieur de la paroi de chaque portion Po du congé de raccordement de bord de fuite 26 et débouche à sa sortie sur l'extérieur de l'aube 18. Chaque gorge 42g présente une dimension axiale non nulle et une dimension radiale d'en fond de gorge supérieure au diamètre d de chaque orifice 42 en amont de la gorge 42g, et une dimension radiale D en sortie de gorge supérieure à la dimension radiale d'en fond de gorge. Plus précisément, au vu de la figure 4, la relation suivante est vérifiée : d < d' < D. En outre, la dimension radiale D en sortie de gorge, appelée diamètre de la gorge 42g, est strictement comprise entre le diamètre d en amont de la gorge 42g et le diamètre du congé de raccordement de bord de fuite D_{BF}, visible sur la figure 3B, soit d < D < D_{BF}.

Préférentiellement, le rapport entre le diamètre d de chaque orifice de refroidissement 42 en amont de la gorge 42g et le diamètre D_{BF} du congé de raccordement de bord de fuite 26 est strictement compris dans la plage 0,25 et 0,85. Autrement dit, 0,25·D_{BF} < d < 0,85·D_{BF}.

Par ailleurs, comme visible sur la figure 3B, le pas radial p des orifices de refroidissement 41, 42, correspondant à la dimension radiale entre deux orifices radialement adjacents et mesuré du centre de la section de sortie d'un orifice au centre de la section de sortie de l'orifice radialement adjacent, est compris entre deux et quatre fois le diamètre d des orifices 41, 42. Par ailleurs, le pas radial des nervures 40, correspondant à la dimension radiale entre deux nervures 40 radialement adjacentes et mesuré du centre d'une nervure au centre de la nervure adjacente, peut être compris entre deux et huit fois la largeur e d'une nervure 40.

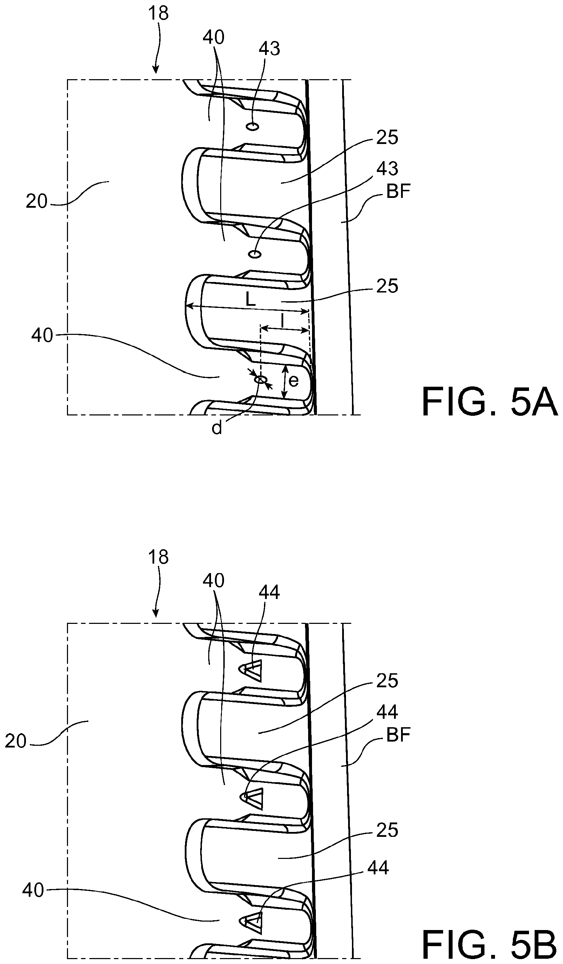

La figure 5A représente une autre réalisation conforme à l'invention dans laquelle les orifices de refroidissement 43 sont formés dans l'épaisseur des nervures 40, entre l'extrémité amont 40a et l'extrémité aval 40b.

Ces orifices 43 peuvent être formés par perçage et être de forme cylindrique, comme sur la figure 5A, voire présenter une forme avec une première partie de forme cylindrique et une deuxième partie de forme évasée comprenant des parois divergentes (orifices de refroidissement de type « laidback fan-shaped hole » selon l'appellation anglo-saxonne), comme sur l'exemple de la figure 5B avec les orifices de refroidissement 44.

Dans le cas des figures 5A et 5B, le mode de refroidissement privilégié pour refroidir les nervures 40 est alors le refroidissement par film, tandis que dans le cas des figures 3A et 3B, c'est le refroidissement par pompage qui est privilégié pour refroidir les nervures 40.

Dans l'exemple de la figure 5A, chaque orifice de refroidissement 43 est de forme cylindrique avec un rapport du diamètre d en section sur la dimension radiale e de la nervure 40, soit la largeur de la nervure 40, strictement compris entre 0,20 et 0,85. Autrement dit, la relation suivante est vérifiée : 0,20·e < d < 0,85·e.

De plus, le positionnement des orifices 43 par rapport à l'extrémité aval 40b de chaque nervure 40 dépend de l'aérothermique et des capacités de fabrication. En particulier, le rapport de la distance axiale l de chaque orifice de refroidissement 43 par rapport à l'extrémité aval 40b de la nervure 40 (soit la distance du perçage par rapport à la fin de la nervure) sur la distance axiale L de la nervure 40 entre ses extrémités amont 40a et aval 40b (soit la longueur de la nervure) est strictement compris entre 0,1 et 0,9. Autrement dit, la relation suivante est vérifiée : 0,1·L < l < 0,9·L.

Par ailleurs, il est possible de combiner entre eux les exemples décrits précédemment en référence aux figures 3A, 3B, 5A et 5B.

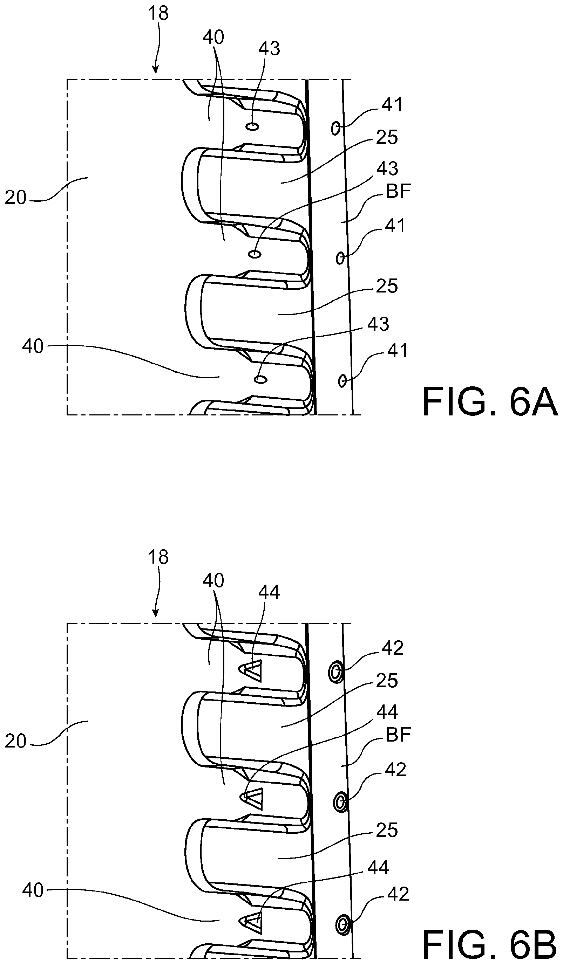

Par exemple, l'exemple de la figure 6A combine les réalisations des figures 3A et 4A, et l'exemple de la figure 6B combine les réalisations des figures 3B et 5B. Ainsi, on obtient sur les figures 6A et 6B des réalisations qui combinent à la fois le refroidissement par pompage et le refroidissement par film. Bien entendu, en fonction des contraintes de conception éventuelles, toutes autres combinaisons sont possibles. En particulier, la position des orifices 43, 44 sur les exemples des figures 5A et 5B peut être variable entre les extrémités amont 40a et aval 40b. Elle peut par exemple être centrée entre ces extrémités 40a et 40b, ou bien encore être située à proximité de l'extrémité aval 40b, soit proche de la sortie des fentes 25.

Bien entendu, l'invention n'est pas limitée aux exemples de réalisation qui viennent d'être décrit. Diverses modifications peuvent y être apportées par l'homme du métier à condition qu'elles soient comprises dans la portée des revendications annexées.

## Revendications

1. Aube (18) de turbine (7) de turbomachine, destinée à être montée autour d'un axe de rotation (2), comportant une plateforme (28) et une pale (30) s'étendant dans une direction radiale (23) par rapport à l'axe de rotation (2), en allant radialement de l'intérieur vers l'extérieur en éloignement de la plateforme (28) et en se terminant par un sommet (S), la pale (30) comprenant un bord d'attaque (BA) et un bord de fuite (BF), le bord de fuite (BF) étant situé en aval du bord d'attaque (BA), et la pale (30) comprenant une paroi d'intrados (20) et une paroi d'extrados (21) reliant chacune le bord d'attaque (BA) au bord de fuite (BF), la paroi d'intrados (20) et la paroi d'extrados (21) étant reliées entre elles au niveau du bord de fuite (BF) par un congé de raccordement de bord de fuite (26),
l'aube (18) comportant une cavité de refroidissement (24) alimentant en flux de refroidissement une pluralité de sorties de refroidissement (25) débouchant sur le bord de fuite (BF), les sorties de refroidissement (25) étant ménagées le long du bord de fuite (BF), sur l'une des parois d'intrados (20) et d'extrados (21), entre la plateforme (28) et le sommet (S), deux sorties de refroidissement (25) radialement adjacentes étant délimitées par une nervure (40) s'étendant entre une extrémité amont (40a), située radialement entre les deux sorties de refroidissement (25) radialement adjacentes, et une extrémité aval (40b), qui débouche sur le bord de fuite (BF),
**caractérisée en ce qu'**au moins un orifice de refroidissement (43, 44) est formé dans l'épaisseur d'au moins une nervure (40), entre l'extrémité amont (40a) et l'extrémité aval (40b), et/ou **en ce qu'**au moins un orifice de refroidissement (41, 42), présentant une portion cylindrique, est formé dans l'épaisseur d'une portion (Po) du congé de raccordement de bord de fuite (26) dans le prolongement axial d'au moins une nervure (40), en aval de l'extrémité aval (40b), de sorte à assurer une communication fluidique pour un flux de refroidissement entre l'intérieur et l'extérieur de l'aube (18) pour le refroidissement de ladite au moins une nervure (40).

2. Aube selon la revendication 1, **caractérisée en ce que** ledit au moins un orifice de refroidissement (41, 42) formé dans l'épaisseur d'une portion (Po) du congé de raccordement de bord de fuite (26) comporte un perçage (41, 42), de préférence ayant une forme circulaire et/ou oblongue en section, l'axe dudit orifice de refroidissement (41, 42) étant notamment agencé dans le prolongement d'un axe médian (AA) de ladite au moins une nervure (40), l'axe médian (AA) s'étendant le long de la nervure (40).

3. Aube selon la revendication 1 ou 2, **caractérisée en ce que** la portion cylindrique dudit au moins un orifice de refroidissement (41, 42) formé dans l'épaisseur d'une portion (Po) du congé de raccordement de bord de fuite (26) présente une dimension radiale (d) en section, notamment un diamètre (d), comprise entre 0,10 mm et 0,50 mm.

4. Aube selon la revendication 3, **caractérisée en ce que** ledit au moins un orifice de refroidissement (42) comporte une gorge (42g) qui débouche sur le bord de fuite (26) et qui s'évase dans le prolongement de la portion cylindrique dudit au moins un orifice de refroidissement (42).

5. Aube selon la revendication 4, **caractérisée en ce que** le rapport entre la dimension radiale (d) dudit au moins un orifice de refroidissement (42) en amont de la gorge (42g) et le diamètre (D_{BF}) du congé de raccordement de bord de fuite (26) est strictement compris dans la plage 0,25 et 0,85.

6. Aube selon l'une quelconque des revendications précédentes, **caractérisée en ce que** ledit au moins un orifice de refroidissement (43, 44) formé dans l'épaisseur d'au moins une nervure (40) comporte un perçage, ayant une forme cylindrique et/ou avec une première partie de forme cylindrique et une deuxième partie de forme évasée comprenant des parois divergentes.

7. Aube selon la revendication 6, **caractérisée en ce que** ledit au moins un orifice de refroidissement (43) est de forme cylindrique avec un rapport du diamètre (d) en section sur la dimension radiale (e) de la nervure (40) strictement compris entre 0,20 et 0,85, et/ou **en ce que** le rapport de la distance axiale (l) dudit au moins un orifice de refroidissement (43) par rapport à l'extrémité aval (40b) de la nervure (40) sur la distance axiale (L) de la nervure (40) entre ses extrémités amont (40a) et aval (40b) est strictement compris entre 0,1 et 0,9.

8. Aube selon l'une quelconque des revendications précédentes, **caractérisée en ce qu'**elle est une aube mobile (18) pour une roue mobile de turbine (7) pour turbomachine, notamment de turbine haute pression.

9. Turbine (7) pour turbomachine, **caractérisée en ce qu'**elle comporte au moins une roue mobile comprenant une pluralité d'aubes mobiles (18) selon l'une quelconque des revendications précédentes, la turbine étant préférentiellement une turbine haute pression.

10. Turbomachine (1), **caractérisée en ce qu'**elle comporte au moins une turbine selon la revendication 9, la turbomachine étant préférentiellement une turbomachine à double corps.

## Patentansprüche

1. Schaufel (18) einer Turbine (7) einer Turbomaschine, die dazu bestimmt ist, um eine Rotationsachse (2) montiert zu werden, umfassend eine Plattform (28) und eine Leitschaufel (30), die sich in einer radialen Richtung (23) in Bezug auf die Rotationsachse (2) erstreckt, indem sie radial von innen nach außen von der Plattform (28) weg verläuft und in einer Oberseite (S) endet, wobei die Leitschaufel (30) eine Vorderkante (BA) und eine Hinterkante (BF) umfasst, wobei sich die Hinterkante (BF) stromabwärts der Vorderkante (BA) befindet, und die Leitschaufel (30) eine untere Oberflächenwand (20) und eine obere Oberflächenwand (21) umfasst, die jeweils die Vorderkante (BA) mit der Hinterkante (BF) verbinden, wobei die untere Oberflächenwand (20) und die obere Oberflächenwand (21) an der Hinterkante (BF) durch eine Hohlkehle (26) der Hinterkante miteinander verbunden ist,
wobei die Schaufel (18) einen Kühlhohlraum (24) umfasst, der eine Vielzahl von Kühlauslässen (25), die an der Hinterkante (BF) münden, mit einem Kühlstrom versorgt, wobei die Kühlauslässe (25) entlang der Hinterkante (BF), an einer der unteren Oberflächenwand (20) und der oberen Oberflächenwand (21), zwischen der Plattform (28) und der Oberseite (S) vorgesehen sind, wobei zwei radial benachbarte Kühlauslässe (25) durch eine Rippe (40) begrenzt werden, die sich zwischen einem stromaufwärtigen Ende (40a), das sich radial zwischen den beiden radial benachbarten Kühlauslässen (25) befindet, und einem stromabwärtigen Ende (40b) erstreckt, das an der Hinterkante (BF) mündet,
**dadurch gekennzeichnet, dass** mindestens eine Kühlöffnung (43, 44) in der Dicke mindestens einer Rippe (40) zwischen dem stromaufwärtigen Ende (40a) und dem stromabwärtigen Ende (40b) ausgebildet ist und/oder dass mindestens eine Kühlöffnung (41, 42), die einen zylindrischen Abschnitt aufweist, in der Dicke eines Abschnitts (Po) der Hohlkehle (26) der Hinterkante in der axialen Verlängerung mindestens einer Rippe (40) stromabwärts des stromabwärtigen Endes (40b) ausgebildet ist, um eine Fluidverbindung für einen Kühlstrom zwischen der Innenseite und der Außenseite der Schaufel (18) zum Kühlen der mindestens einen Rippe (40) sicherzustellen.

2. Schaufel nach Anspruch 1, **dadurch gekennzeichnet, dass** die mindestens eine Kühlöffnung (41, 42), die in der Dicke eines Abschnitts (Po) der Hohlkehle (26) der Hinterkante ausgebildet ist, eine Bohrung (41, 42) umfasst, die vorzugsweise im Querschnitt eine runde und/oder längliche Form aufweist, wobei die Achse der Kühlöffnung (41, 42) insbesondere in der Verlängerung einer Mittelachse (AA) der mindestens einen Rippe (40) angeordnet ist, wobei sich die Mittelachse (AA) entlang der Rippe (40) erstreckt.

3. Schaufel nach Anspruch 1 oder 2, **dadurch gekennzeichnet, dass** der zylindrische Abschnitt der mindestens einen Kühlöffnung (41, 42), die in der Dicke eines Abschnitts (Po) der Hohlkehle (26) der Hinterkante ausgebildet ist, eine radiale Abmessung (d) im Querschnitt, insbesondere einen Durchmesser (d), zwischen 0,10 mm und 0,50 mm aufweist.

4. Schaufel nach Anspruch 3, **dadurch gekennzeichnet, dass** die mindestens eine Kühlöffnung (42) eine Nut (42g) umfasst, die an der Hinterkante (26) mündet und sich in der Verlängerung des zylindrischen Abschnitts der mindestens einen Kühlöffnung (42) aufweitet.

5. Schaufel nach Anspruch 4, **dadurch gekennzeichnet, dass** das Verhältnis zwischen der radialen Abmessung (d) der mindestens einen Kühlöffnung (42) stromaufwärts der Nut (42g) und dem Durchmesser (D_{BF}) der Hohlkehle (26) der Hinterkante streng im Bereich von 0,25 und 0,85 liegt.

6. Schaufel nach einem der vorhergehenden Ansprüche, **dadurch gekennzeichnet, dass** die mindestens eine Kühlöffnung (43, 44), die in der Dicke mindestens einer Rippe (40) ausgebildet ist, eine Bohrung umfasst, die eine zylindrische Form und/oder einen ersten Teil mit zylindrischer Form und einen zweiten Teil mit aufgeweiteter Form aufweist, der divergierende Wände umfasst.

7. Schaufel nach Anspruch 6, **dadurch gekennzeichnet, dass** die mindestens eine Kühlöffnung (43) eine zylindrische Form hat, wobei ein Verhältnis des Durchmessers (d) im Querschnitt zur radialen Abmessung (e) der Rippe (40) streng zwischen 0,20 und 0,85 liegt, und/oder wobei das Verhältnis des axialen Abstands (l) der mindestens einen Kühlöffnung (43) in Bezug auf das stromabwärtige Ende (40b) der Rippe (40) zum axialen Abstand (L) der Rippe (40) zwischen ihrem stromaufwärtigen (40a) und stromabwärtigen (40b) Ende streng zwischen 0,1 und 0,9 liegt.

8. Schaufel nach einem der vorhergehenden Ansprüche, **dadurch gekennzeichnet, dass** sie eine Laufschaufel (18) für ein Turbinenlaufrad (7) für eine Turbomaschine, insbesondere eine Hochdruckturbine, ist.

9. Turbine (7) für eine Turbomaschine, **dadurch gekennzeichnet, dass** sie mindestens ein Laufrad umfasst, das eine Vielzahl von Laufschaufeln (18) nach einem der vorhergehenden Ansprüche umfasst, wobei die Turbine vorzugsweise eine Hochdruckturbine ist.

10. Turbomaschine (1), **dadurch gekennzeichnet, dass** sie mindestens eine Turbine nach Anspruch 9 umfasst, wobei die Turbomaschine vorzugsweise eine Doppelkörper-Turbomaschine ist.

## Claims

1. A turbomachine turbine (7) blade (18), intended to be mounted around an axis of rotation (2), including a platform (28) and a vane (30) extending in a radial direction (23) relative to the axis of rotation (2), going radially from the inside to the outside away from the platform (28) and ending in a top (S), the vane (30) comprising a leading edge (BA) and a trailing edge (BF), the trailing edge (BF) being located downstream of the leading edge (BA), and the vane (30) comprising a lower surface wall (20) and an upper surface wall (21) each connecting the leading edge (BA) to the trailing edge (BF), the lower surface wall (20) and the upper surface wall (21) being connected to each other at the trailing edge (BF) by a trailing edge fillet (26),
the blade (18) including a cooling cavity (24) supplying cooling flow to a plurality of cooling outlets (25) emerging onto the trailing edge (BF), the cooling outlets (25) being provided along the trailing edge (BF), on one of the lower surface (20) and upper surface (21) walls, between the platform (28) and the top (S), two radially adjacent cooling outlets (25) being delimited by a rib (40) extending between an upstream end (40a), located radially between the two radially adjacent cooling outlets (25), and a downstream end (40b), which emerges onto the trailing edge (BF),
**characterised in that** at least one cooling hole (43, 44) is formed in the thickness of at least one rib (40), between the upstream end (40a) and the downstream end (40b), and/or at least one cooling hole (41, 42), having a cylindrical portion, is formed in the thickness of a portion (Po) of the trailing edge fillet (26) in the axial extension of at least one rib (40), downstream of the downstream end (40b), so as to ensure fluid communication for a cooling flow between the inside and the outside of the blade (18) for cooling said at least one rib (40).

2. The blade according to claim 1, **characterised in that** said at least one cooling hole (41, 42) formed in the thickness of a portion (Po) of the trailing edge fillet (26) includes a drilling (41, 42), preferably having a circular and/or oblong cross-sectional shape, the axis of said cooling hole (41, 42) being in particular arranged in the extension of a median axis (AA) of said at least one rib (40), the median axis (AA) extending along the rib (40).

3. The blade according to claim 1 or 2, **characterised in that** the cylindrical portion of said at least one cooling hole (41, 42) formed in the thickness of a portion (Po) of the trailing edge fillet (26) has a radial cross-sectional dimension (d), in particular a diameter (d), comprised between 0.10 mm and 0.50 mm.

4. The blade according to claim 3, **characterised in that** said at least cooling hole (42) includes a groove (42g) which emerges onto the trailing edge (26) and which flares out in the extension of the cylindrical portion of said at least cooling hole (42).

5. The blade according to claim 4, **characterised in that** the ratio between the radial dimension (d) of said at least one cooling hole (42) upstream of the groove (42g) and the diameter (D_{BF}) of the trailing edge fillet (26) is strictly comprised within the range 0.25 and 0.85.

6. The blade according to any one of the preceding claims, **characterised in that** said at least one cooling hole (43, 44) formed in the thickness of at least one rib (40) has a drilling, having a cylindrical shape and/or with a first portion of cylindrical shape and a second portion of flared shape comprising divergent walls.

7. The blade according to claim 6, **characterised in that** said at least one cooling hole (43) is cylindrical in shape with a ratio of the cross-sectional diameter (d) to the radial dimension (e) of the rib (40) strictly comprised between 0.20 and 0.85, and/or **in that** the ratio of the axial distance (l) of said at least one cooling hole (43) relative to the downstream end (40b) of the rib (40) to the axial distance (L) of the rib (40) between its upstream (40a) and downstream (40b) ends is strictly comprised between 0.1 and 0.9.

8. The blade according to any one of the preceding claims, **characterised in that** it is a moving blade (18) for a moving turbine wheel (7) for a turbomachine, in particular a high pressure turbine.

9. A turbine (7) for a turbomachine, **characterised in that** it includes at least one moving wheel comprising a plurality of moving blades (18) according to any one of the preceding claims, the turbine preferably being a high pressure turbine.

10. A turbomachine (1), **characterised in that** it includes at least one turbine according to claim 9, the turbomachine preferably being a twin-spool turbomachine.
